# EUROPÄISCHE PATENTSCHRIFT

(11) **EP 1 606 987 B1**
(45) Veröffentlichungstag und Bekanntmachung des Hinweises auf die Patenterteilung: **12.09.2007**
(21) Anmeldenummer: 05012642.4
(22) Anmeldetag: 13.06.2005
(51) Int. Cl.: A01D 34/86

(54) **Mäheinrichtung**
Mowing device
Dispositif de coupe

(30) Priorität: 16.06.2004 DE 102004028842
(43) Veröffentlichungstag der Anmeldung: 21.12.2005
(73) Patentinhaber: Stärker Torsten, 99094 Erfurt (DE); Baumann, Richard, 99089 Erfurt (DE)
(72) Erfinder: Stärker Torsten, 99094 Erfurt (DE); Baumann, Richard, 99089 Erfurt (DE)
(74) Vertreter: Engel, Christoph Klaus

(56) Entgegenhaltungen:
- WO-A-03/007691
- DE-U1- 9 311 854
- US-A- 3 241 302

## Beschreibung

Die vorliegende Erfindung betrifft eine Mäheinrichtung zum Mähen von Gras um Straßenleitpfosten und andere Verkehrsleitelemente, die an einem Fahrzeug anbringbar ist. Sie umfasst ein Gestell, einen zwei Schenkel umfassenden Träger, der über einen Hauptdrehpunkt am Gestell befestigt ist, und Schneidwerkzeuge, die an den Schenkeln angebracht sind.

Aus der DE 298 24 524 U1 ist ein Leitpfostenmäher bekannt. Bei diesem Leitpfostenmäher besteht ein U-förmiger Träger aus einer Traverse und daran befestigten, sich nach unten erstreckenden Holmen, die länger sind als ein Straßenleitpfosten. An den Enden der Holme sind Mähköpfe befestigt, aus denen Nylon-Mähfäden radial hervorstehen. Die Mähköpfe sind so voneinander beabstandet, dass ein gleichzeitiges Mähen von zwei Seiten des Straßenleitpfostens möglich ist. Bei diesem bekannten Leitpfostenmäher wird der Träger von oben über den Straßenleitpfosten gestülpt. Das wirkt sich insofern nachteilig aus, weil der Einsatz des Leitpfostenmähers abhängig ist von der Höhe des Leitpfostens, der ein bestimmtes Maß nicht überschreiten darf. Die Pfosten von Verkehrszeichen können daher beispielsweise nicht ummäht werden. Als weiterer Nachteil ist zu sehen, dass nach dem Mähen von zwei sich gegenüberliegenden Seiten des Leitpfostens der Träger neu angesetzt werden muss, um die anderen beiden Seiten zu mähen. Außerdem ist die Verwendung von Nylon-Mähfäden hinsichtlich des Verschleißverhaltens ungünstig.

Die DE 87 10 982 Ul beschreibt einen Mulcher, der dem Mähen von Gras und Gestrüpp, insbesondere in Wein- und Obstbauanlagen dient. Mit diesem Mulcher können auch Straßenleitpfosten und andere Hindernisse ummäht werden. Der Mulcher hat einen Mähkopf mit sternförmig angeordneten Mulchmessern in Form von Scheiben, welche an einer zentralen Aufhängung rotieren, wobei die Anzahl und der Durchmesser der Messer wählbar sind. Der Stern wird mittels einer Kurvenscheibe mit federbelasteter Rolle in einer stabilen Lage gehalten und durch einen Tastarm gelöst. Durch die Drehung des Sterns wird das Gras abgeschnitten, bis die Scheibe gegen ein Hindernis läuft. Dann wird die Scheibe nach außen gedreht, wobei sich der gesamte Stern um das Hindernis dreht. Durch ihre spezielle Bauweise eignen sich Mulcher nicht besonders zum Mähen um Straßenleitpfosten. Sie finden dort auch kaum praktische Anwendung. Außerdem sind diese bekannten Geräte aufgrund des komplizierten Aufbaus teuer und wartungsintensiv.

Die DE 92 18 515 Ul beinhaltet ein Mähgerät mit mindestens zwei an einem Träger befestigten Mähköpfen und einen Hydraulikmotor als Antriebseinheit. Der Träger hat eine U-förmige Gestalt und die Mähköpfe sind drehbar an den beiden Außenschenkeln des Trägers befestigt. Als Kraftübertragungsmittel zwischen der Antriebseinheit und den Mähköpfen kommen Riemenscheiben und Keilriemen zur Anwendung. An den Mähköpfen sind Kunststoff-Mähfäden befestigt, die als Schneidwerkzeuge fungieren. Bei diesem Mähgerät ist auch eine Anschlusskonsole zum Anbau an ein Fahrzeug vorgesehen. Das Mähgerät wird an den zu ummähenden Pfosten heranbewegt, so dass der Pfosten zwischen den horizontalen Schenkeln des Trägers steht und der Grasbewuchs an zwei sich gegenüberliegenden Seiten des Pfostens gemäht werden kann. Nachteilig wirkt sich aus, dass immer nur zwei Seiten des Pfostens gleichzeitig gemäht werden können und anschließend der Träger vom Pfosten wegbewegt und nach einer Drehung um 90° neu an den Pfosten heranbewegt werden muss, um die übrigen zwei Seiten zu mähen. Diese Handhabung verlangt großes Geschick vom Bediener und erfordert einen erheblichen Zeitaufwand. Die Verwendung von Kunststoff-Mähfäden gewährleistet zwar ein sauberes Ausmähen um den Pfosten, jedoch ist der Verschleiß relativ hoch. Das Wechseln der verbrauchten Kunststoff-Mähfäden führt zu einem erhöhten Wartungsaufwand.

Aus der FR 2 564 279 Al ist eine Mäheinrichtung mit zwei vorderen Schneidwerkzeugen und einem hinteren Schneidwerkzeug bekannt. Das hintere Schneidwerkzeug ist so positioniert, dass es beim Mähen die zwischen den vorderen Schneidwerkzeugen ungemäht bleibende Fläche mäht. Die Schneidwerkzeuge sind an einem Träger befestigt, der über eine vertikale Achse mit einem Rollenarm verbunden ist. Der Rollenarm selbst ist mit einem Fahrzeug verbunden. Beim Anschlag des Leitpfostens an den Träger wird mit Hilfe des Rollenarms ein Schwenken des Trägers bewirkt. Der zur Aufnahme des Leitpfostens dienende Abstand zwischen den vorderen Schneidwerkzeugen kann nicht variiert werden. Eine Anpassung an unterschiedliche Durchmesser zu ummähender Hindernisse ist daher nicht möglich. Außerdem verbleiben bei nicht exakt mittig zwischen den Schneidwerkzeugen einlaufendem Leitpfosten ungemähte Bereiche.

Die DE 93 11 854 U1 beschreibt eine Schneideinrichtung mit einem Drehtrennwerkzeug und zwei im Abstand zum Drehtrennwerkzeug und im Abstand zueinander angeordneten Zusatztrennwerkzeugen. Der Wirkungsbereich mindestens eines Trennwerkzeugs ist relativ zu den Wirkungsbereichen der anderen Trennwerkzeuge verschiebbar. Die Schneideinrichtung ist über einen teleskopartig ausziehbaren Tragarm drehbar mit einem Fahrzeug verbunden. Beim Kontakt der Schneideinrichtung mit den beiden nach vorne weisenden Zusatztrennwerkzeugen mit einem Leitpfosten werden die federnd zusammengehaltenen Zusatztrennwerkzeuge durch den Leitpfosten auseinandergedrückt. Durch die drehbare Befestigung der Schneideinrichtung am Dreharm wird beim Kontakt des Drehtrennwerkzeugs mit dem Leitpfosten ein Verschwenken der Schneideinrichtung um 90° bewirkt. Bei der Weiterfahrt des Fahrzeugs schwenkt die Schneideinrichtung um weitere 90° herum. Die Schneideinrichtung wird nach beendetem Freischneidvorgang wieder so ausgerichtet, dass beide Zusatztrennwerkzeuge in Fahrtrichtung vorne liegen. Bei der Drehung der Schneideinrichtung um den Leitpfosten herum kann der Leitpfosten unerwünscht hohe Kräfte auf das Drehtrennwerkzeug ausüben. Für ein kontrolliertes Drehen der Schneideinrichtung wird die Verwendung eines Schwenkantriebs vorgeschlagen. Dies führt allerdings zu einer Verkomplizierung der Mäheinrichtung und erhöhtem Wartungsaufwand.

Der DE 43 05 135 A1 kann ein Schneidwerk zum Umschneiden und Unterschneiden von Hindernissen entnommen werden, welches an einem schwenkbaren Ausleger geführt wird. An einem Rotationsmähkopf befinden sich drei Schneidmesser tragende Rotoren, deren Lagerstellen die Eckpunkte eines gleichseitigen Dreiecks sind. Die Rotoren befinden sich in einem Gehäuse mit dreiviertelkreisförmigen Kammern, die zwischen sich Einbuchtungen aufweisen, welche ein Hindernis umfassen können. Beim Anlaufen des Rotationsmähkopfes an ein Hindernis dreht sich der Ausleger so weit, bis sich das Hindernis vor dem Rotationsmähkopf befindet und von einer Einbuchtung aufgenommen wird. Die Messer werden dicht an das Hindernis herangeführt und es wird freigeschnitten. Problematisch bei diesem Schneidwerk ist, dass der Abstand zwischen den Schneidmessern nicht variiert werden kann. Die Einbuchtungen müssen im Vorfeld an gängige Durchmesser von Hindernissen angepasst werden.

Die Aufgabe der vorliegenden Erfindung besteht somit darin, eine verbesserte Mäheinrichtung der eingangs beschriebenen Art zu schaffen, welche sich insbesondere durch eine einfache und zeitsparende Handhabung auszeichnet, bei der das vollständige, saubere Ummähen des Leitpfostens in einem Arbeitsgang möglich ist, ohne dabei die Fahrt zu unterbrechen. Weiterhin soll sich die Mäheinrichtung selbsttätig an unterschiedliche zu ummähende Hindernisse anpassen können und verschleißarme Schneidwerkzeuge aufweisen.

Diese Aufgabe wird durch die erfindungsgemäße Mäheinrichtung gelöst, deren Merkmale im beigefügten Anspruch 1 angegeben sind.

Die erfindungsgemäße Mäheinrichtung gewährleistet ein vollständiges Ummähen des Leitpfostens in einem Arbeitsgang, ohne dabei die Fahrtrichtung zu verändern bzw. die Fahrt zu unterbrechen. Ein mehrfaches Ansetzen der Mäheinrichtung am Leitpfosten ist nicht erforderlich. Die Mäheinrichtung, die vorzugsweise an einem für die Ankopplung anzutreibender Werkzeuge ausgerüsteten Fahrzeug angebracht ist, wird beim Mähen an den Leitpfosten heran gefahren, so dass dieser zwischen die beiden Schenkel des Trägers einläuft. Durch die ununterbrochen fortgesetzte Bewegung des Trägers in Fahrtrichtung schlägt der Leitpfosten (oder ein anderes zu ummähendes stabförmiges Hindernis) entweder an den vom Fahrzeug entfernt liegenden außenliegenden Schenkel bzw. die Traverse oder den zum Fahrzeug hin gerichteten innenliegenden Schenkel an. Bei Kontakt des Leitpfostens mit dem außenliegenden Schenkel oder der Traverse wird der Träger durch die eingeleitete Anschlagkraft entgegen der Fahrtrichtung um den Hauptdrehpunkt gedreht, so dass er dem Leitpfosten durch eine kreisförmige Bewegung ausweichen kann. Die Drehung des Trägers erfolgt so lange, bis die Schneidwerkzeuge den Leitpfosten vollständig ummäht haben. Somit kann der Leitpfosten unter Beibehaltung der Fahrtrichtung nach hinten aus dem Träger ausgelassen werden. Bei Kontakt des Leitpfostens mit dem innenliegenden Schenkel, der zu einem beliebigen Zeitpunkt während des Ummähens auftreten kann, wird der innenliegende Schenkel durch die eingeleitete Kraft vom außenliegenden Schenkel über den Nebendrehpunkt weggeschwenkt, in zur Drehung des Trägers um den Hauptdrehpunkt entgegen gesetzter Drehrichtung, um dem Leitpfosten auszuweichen. Durch dieses Wegschwenken wird sichergestellt, dass der Leitpfosten durch die am innenliegenden Schenkel befestigten Schneidwerkzeuge nicht beschädigt wird. Durch die fortgesetzte Bewegung des Trägers kommt es im Folgenden zum Kontakt des Leitpfostens mit dem außenliegenden Schenkel oder der Traverse und der dadurch bedingten oben beschriebenen Drehung des Trägers um den Hauptdrehpunkt. In jedem Fall, also unabhängig davon auf welche Art und Weise der Leitpfosten zwischen die beiden Schenkel einläuft, wird ein vollständiges Ummähen des Leitpfostens erreicht. Die Schwenkbarkeit des innenliegenden Schenkels, die mit einer Vergrößerung des Abstands zwischen den Schenkeln verbunden ist, ermöglicht darüber hinaus eine flexible Anpassung an unterschiedliche Durchmesser von Hindernissen.

Bei einer besonders vorteilhaften Ausführungsform weist die Traverse eine zur Aufnahme des Leitpfostens geeignete Einbuchtung auf. Diese Einbuchtung besitzt bevorzugt eine Kreisbogenform. Durch eine derartige Einbuchtung kann der Leitpfosten besonders günstig aufgenommen und ummäht werden.

Von Vorteil ist es, wenn über Rückstellmittel wie Federn oder Seilzüge ein Zurückschwenken des innenliegenden Schenkels und des Trägers in die Ausgangsposition bewirkt wird. Auf diese Weise ist sichergestellt, dass die Mäheinrichtung nach dem der Leitpfosten vollständig ummäht wurde automatisch in die zur Ausführung des nächsten Freischneidvorgangs benötigte Ausgangsposition gebracht wird. Mehrere Freischneidvorgänge können daher ohne Fahrtunterbrechung durchgeführt werden. Die Rückstellbarkeit des innenliegenden Schenkels ermöglicht darüber hinaus während des Einlaufens des Leitpfostens bzw. des Freischneidvorgangs eine aufgrund der Fahrbewegung oder des Geländeverlaufs ggf. erforderliche Lagekorrektur des innenliegenden Schenkels.

Bei einer bevorzugten Ausführungsform bestehen die Schneidwerkzeuge aus rotierenden Messern, wobei jedes Schneidwerkzeug beispielsweise mit je zwei oder drei rotierenden Messern ausgestattet ist. Diese Art der Schneidwerkzeuge gewährleistet eine lange Lebensdauer und einen geringen Verschleiß bei einer hohen Qualitätsgarantie hinsichtlich der Schnittqualität. Abweichend von dieser Ausführungsform ist es auch möglich, die Anzahl der rotierenden Messer zu verändern. Ebenso ist es möglich, Kunststoff-Mähfäden als Schneidwerkzeuge einzusetzen, wobei diese sich jedoch schnell abnutzen und häufig gewechselt werden müssen.

In einer weiteren vorteilhaften Ausführungsform werden die Schneidwerkzeuge mit je einem Hydraulikmotor angetrieben, wobei sich der Hydraulikmotor jeweils direkt am Schneidwerkzeug befindet und durch eine rotierende Welle zur übertragung der Drehbewegung auf das Schneidwerkzeug mit diesem verbunden ist. Es wäre auch möglich, die Energieübertragung durch nur einen gemeinsamen Motor und entsprechende Kraftübertragungselemente, z.B. durch Keilriemen, zu realisieren.

Als vorteilhaft zeigt es sich, wenn der Träger um den Hauptdrehpunkt um etwa 120° drehbar ist. Dieser Winkel erweist sich als günstig, um den Leitpfosten aus dem Träger bei Fortsetzung der Fahrt und Einhaltung der Fahrtrichtung rechtzeitig freizugeben. Um die Freigabe des Leitpfostens aus den Träger zu garantieren, ist ein Drehwinkel des Trägers um den Hauptdrehpunkt von mehr als 90° sicherzustellen, wobei der Drehwinkel bis 180° betragen kann.

Von Vorteil ist es, wenn bei einer weiteren Ausführungsform die Mäheinrichtung so flach gebaut ist, dass ein Unterfahren von Hindernissen, beispielsweise von Schutz- bzw. Leitplanken, möglich ist. In diesem Zusammenhang ist es besonders vorteilhaft, wenn bei einer weiteren Ausführungsform die Mäheinrichtung quer zur Fahrtrichtung verschiebbar ist, wobei die Verschiebung mittels eines Hydraulikzylinders erfolgt. Da sich die Schutzplanken zumeist näher am Straßenrand befinden als die Leitpfosten, kann durch diese Zusatzfunktion das Mähen von Gras auch unter bzw. hinter Schutzplanken ermöglicht werden. Die Stützpfosten der Schutzplanken werden in der gleichen Weise wie die Straßenleitpfosten ummäht. Eine Änderung der Fahrtrichtung oder eine Fahrtunterbrechung ist auch in diesen Fällen nicht erforderlich.

Bei einer abgewandelten Ausführungsform ist ein Höhenversatz zwischen dem Träger und dem Gestell so gewählt, dass das Gestell im Mähbetrieb oberhalb der Leitplanke entlang läuft, während der Träger mit den Schneidwerkzeugen die Grasflächen hinter der Leitplanke bearbeitet. Zur Positionierung wird das Gestell mit dem Träger über die Leitplanke bewegt und der Träger dann auf den Boden aufgesetzt. Diese Ausführungsform eignet sich besonders dort, wo der Grasbewuchs erst hinter den Leitplanken beginnt, wobei sich unterhalb der Leitplanken meist Schotter befindet.

Mittels eines weiteren Hydraulikzylinders ist es bei einer veränderten Bauform möglich, das Gestell und damit auch den Träger anzukippen. Dadurch können auch Flächen gemäht werden, die vom Straßenrand ausgehend leichte Steigungen bzw. Gefälle aufweisen. Außerdem können Geländeunebenheiten oder Flächen, die nicht zu mähen sind, ohne Bodenberührung überfahren werden. Vorteilhaft ist dabei, dass auch hier die Fahrtrichtung nicht geändert werden muss, da die Flächen nicht umfahren werden müssen.

Die erfindungsgemäße Mäheinrichtung zeichnet sich auch durch eine einfache Bedienung aus. Die Bedienelemente können im Fahrzeug angebracht sein, so dass sie vom Fahrer problemlos erreichbar sind.

Weitere Vorteile und Einzelheiten ergeben sich aus der nachfolgenden Beschreibung einer bevorzugten Ausführungsform unter Bezugnahme auf die Zeichnung. Es zeigen:
- Fig. 1: eine vereinfachte Draufsicht auf eine erfindungsgemäße Mäheinrichtung mit einem Leitpfosten, der zwischen zwei Schenkeln eines Trägers positioniert ist;
- Fig. 2: eine Draufsicht auf die Mäheinrichtung nach Fig. 1 mit an einer Traverse des Trägers anschlagendem Leitpfosten;
- Fig. 3: eine Draufsicht auf die Mäheinrichtung nach Fig. 1 mit an der Traverse des Trägers angeschlagenem Leitpfosten, wobei der Träger um einen Hauptdrehpunkt weiter verdreht ist;
- Fig. 4: eine Draufsicht auf die Mäheinrichtung nach Fig. 1 mit nach hinten ausgefahrenem Leitpfosten;
- Fig. 5: eine vereinfachte Seitenansicht der Mäheinrichtung.

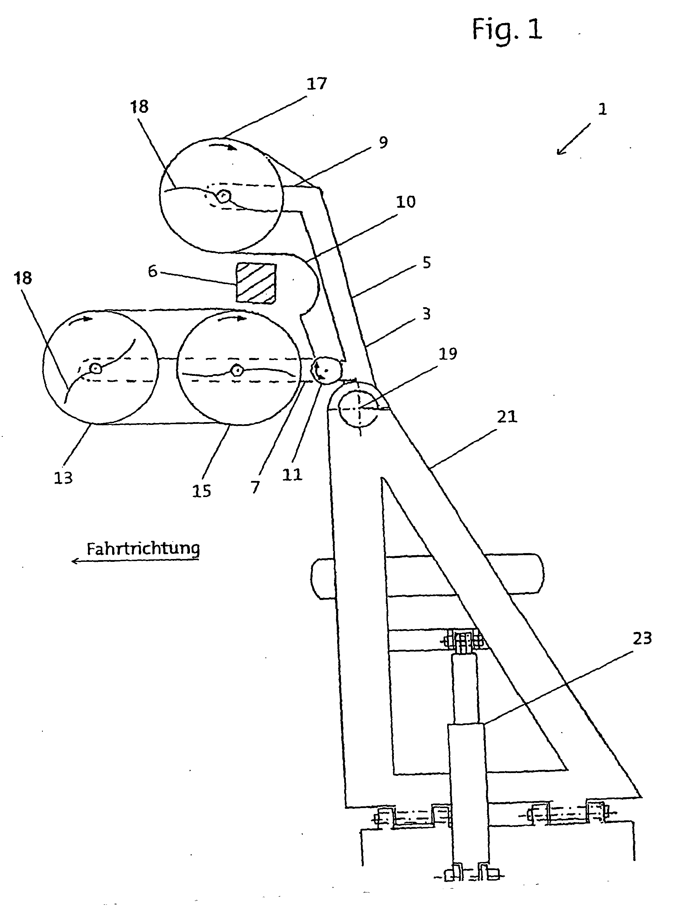

Fig. 1 zeigt eine vereinfachte Draufsicht auf eine erfindungsgemäße Mäheinrichtung 1. Die Mäheinrichtung 1 umfasst einen Träger 3, der aus einer Traverse 5, einem fahrzeugnahen innenliegenden Schenkel 7 und einem vom Fahrzeug entfernter liegenden, außenliegenden Schenkel 9 besteht. Der Träger 3 weist im Bereich der Traverse 5 eine zur Aufnahme eines Leitpfostens 6 geeignete Einbuchtung 10 auf, die vorzugsweise kreisbogenförmig ist. Die Traverse 5 ist in einem Winkel vom vorzugsweise 45° bis 135° zur Fahrtrichtung ausgerichtet. Die beiden Schenkel 7, 9 erstrecken sich von der Traverse 5 ausgehend in Fahrtrichtung. Die Traverse 5 ist drehfest mit dem außenliegenden Schenkel 9 und drehbar über einen Nebendrehpunkt 11 mit dem innenliegenden Schenkel 7 verbunden. An dem innenliegenden Schenkel 7 befinden sich ein in Fahrtrichtung gelegenes vorderes Schneidwerkzeug 13 und ein in Fahrtrichtung gelegenes hinteres Schneidwerkzeug 15. An dem außenliegenden Schenkel 9 ist ein drittes Schneidwerkzeug 17 befestigt. Die vom dritten Schneidwerkzeug 17 erfasste Mähfläche liegt in Fahrtrichtung gesehen teilweise hinter der vom vorderen Schneidwerkzeug 13 erfassten Mähfläche. Bevorzugt liegt diese vom dritten Schneidwerkzeug 17 erfasste Mähfläche in Fahrtrichtung gesehen auch teilweise vor der vom hinteren Schneidwerkzeug 15 erfassten Mähfläche. Die Schneidwerkzeuge sind beispielsweise aus rotierenden Messern 18 gebildet und werden von jeweiligen Gehäusen abgedeckt, zum Schutz gegen Verletzungen bzw. direkten Kontakt des Leitpfostens mit den rotierenden Messern. Die Gehäuse umgreifen die Schneidwerkzeuge, stehen aber nur geringfügig seitlich über den bei rotierenden Schneidwerkzeugen beschriebenen Mähkreis hinaus.

Die Mäheinrichtung 1 befindet sich in der in Fig. 1 gezeigten Stellung in der Ausgangsposition zum Ummähen des Leitpfostens 6, bei der sich der Leitpfosten 6 bereits zwischen den beiden Schenkeln 7, 9 des Trägers 3 befindet aber noch kein Kontakt mit der Mäheinrichtung erfolgte. In dieser Ausgangsposition sind die beiden Schenkel 7, 9 so weit voneinander beabstandet, dass sich die Schneidwerkzeuge 13, 15, 17 nicht berühren und das ungehinderte Einlaufen eines Leitpfosten jedenfalls dann möglich ist, wenn eine optimale seitliche Ausrichtung vorliegt. Bei fortgesetzter Bewegung des Trägers 3 in Fahrtrichtung wird der Leitpfosten 6 von drei Seiten vom Träger 3 umschlossen.

Der Träger 3 ist mittels eines Hauptdrehpunktes 19 an einem Gestell 21 befestigt, welches wiederum die Verbindung zu einem Fahrzeug (nicht gezeigt) herstellt. Die Funktionsweise des Hauptdrehpunktes 21, der eine Verdrehung des Trägers 3 während des Mähbetriebs ermöglicht, um den Leitpfosten 6 zu ummähen, wird aus der nachfolgenden Beschreibung des weiteren Arbeitsablaufs verständlich.

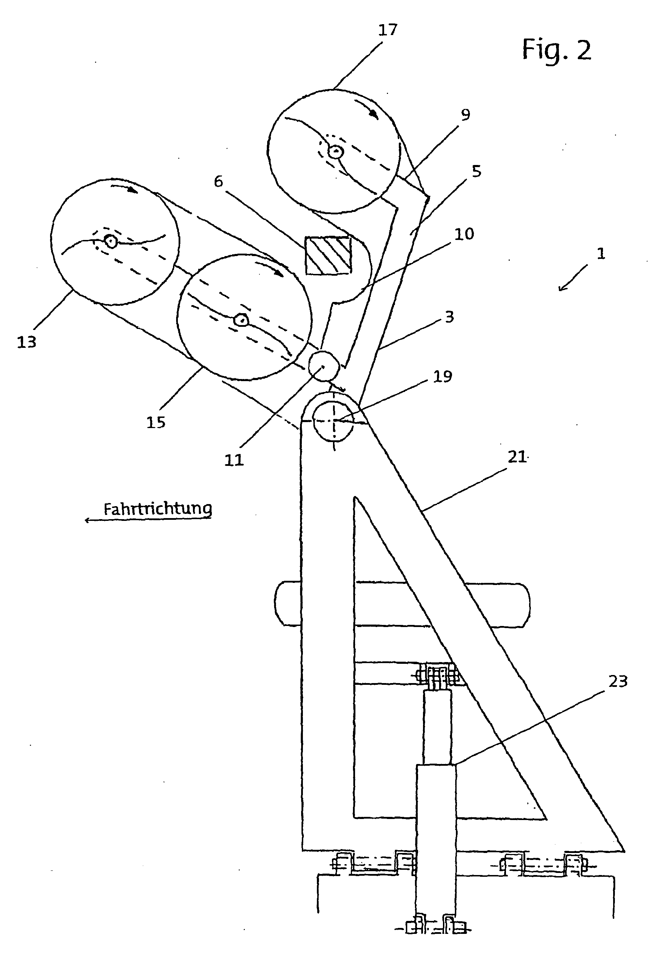

Fig. 2 zeigt die Mäheinrichtung 1, wobei im Vergleich zur Fig. 1 eine Fortbewegung in Fahrtrichtung erfolgt ist. Dabei schlägt der Leitpfosten 6 an die Traverse 5 des Trägers 3, beispielsweise im Bereich der Einbuchtung 10, an. Durch den Anschlag des Leitpfostens 6 an der Traverse 5 wird eine Drehbewegung des Trägers 3 um den Hauptdrehpunkt 19 entgegen der Fahrtrichtung bewirkt. Der Träger weicht dadurch dem Leitpfosten aus, wobei die einzelnen Schneidwerkzeuge gleichzeitig eine kreisförmige Bahn durchlaufen, deren Mittelpunkt in der Achse des. Hauptdrehpunktes 19 liegt. Eine derartige Drehbewegung würde auch beim Anschlagen des Leitpfostens 6 am außenliegenden Schenkel 9 bzw. dem diesem Schenkel zugeordneten Gehäuseteil des dritten Schneidwerkzeugs 17 hervorgerufen werden. Bei gleichzeitigem Betrieb der Schneidwerkzeuge 13, 15, 17 erfolgt damit ein kreisförmiges Ummähen des Leitpfostens 6. Um diese Drehbewegung zu ermöglichen, muss der Hauptdrehpunkt 19 in Bezug auf den Verlauf der Einbuchtung 10 so angeordnet sein, dass ein Verkanten des Leitpfostens 6 ausgeschlossen ist und die Drehung des Trägers 3 bei fortgesetzter Fahrt kontinuierlich erfolgen kann. Außerdem muss die Drehbewegung bereits bei relativ geringer Anschlagkraft ausgeführt werden, damit der Leitpfosten nicht beschädigt wird.

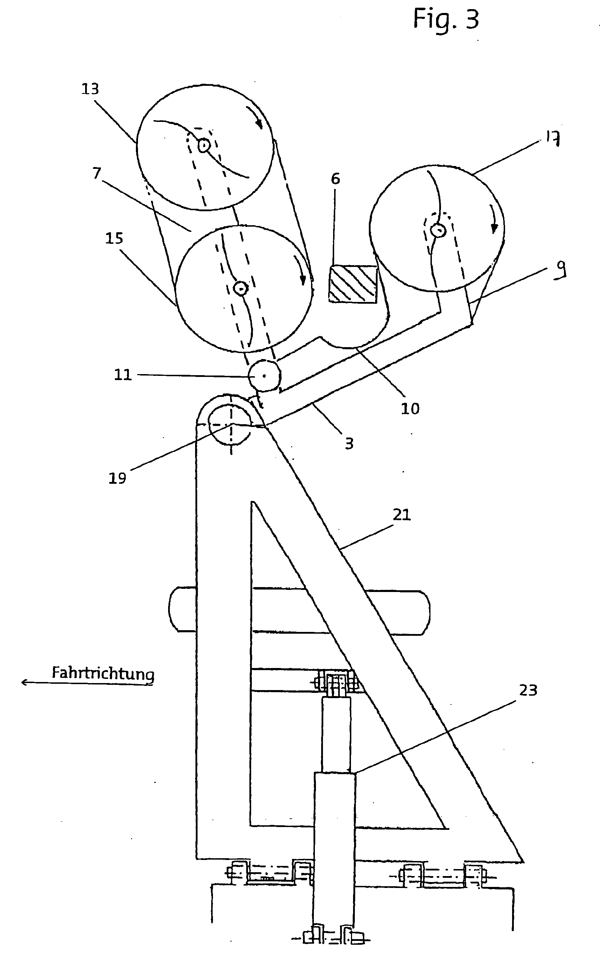

Bei der in Fig. 3 gezeigten Stellung der Mäheinrichtung ist der Mähbetrieb nochmals weiter fortgeschritten. Die Drehung des Trägers 3 um den Hauptdrehpunkt 19 hat eine Position von fast 90° erreicht und somit befindet sich auch die Einbuchtung 10 in einer um ca. 90° gedrehten Position im Vergleich zur Ausgangsposition in Fig. 1.

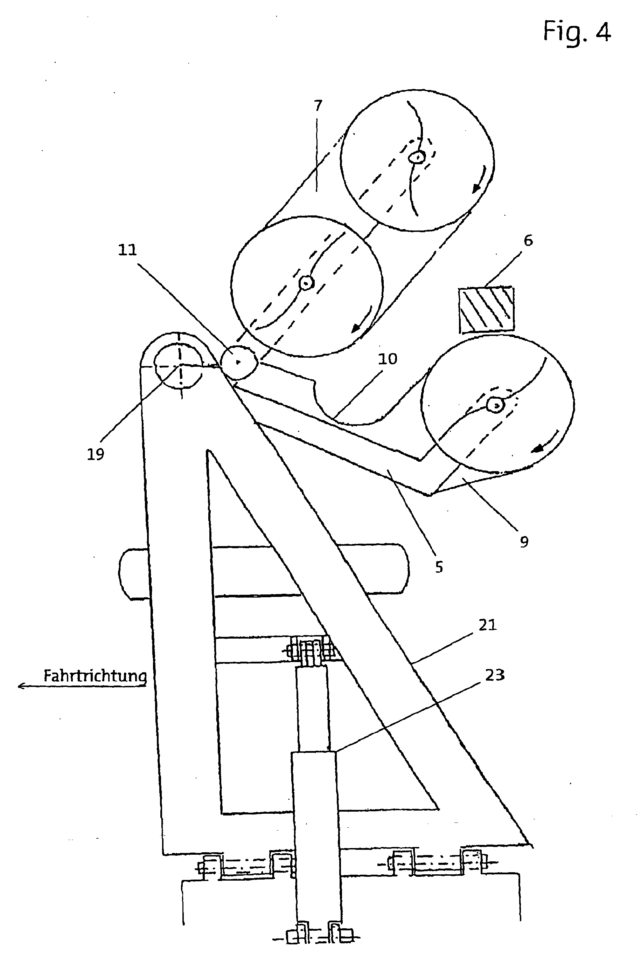

Wie in Fig. 4 ersichtlich ist, wird der Leitpfosten 6 an der entgegengesetzten Seite der Fahrtrichtung freigegeben, wenn der Träger 3 durch die Drehung um den Hauptdrehpunkt 19 eine Position erreicht hat, bei welcher der senkrecht zur Fahrtrichtung betrachtete wirksame Öffnungsabstand zwischen den Schenkeln 7, 9 mindestens der Breite des Leitpfostens 6 entspricht. Dieser Öffnungsabstand ist abhängig vom Drehwinkel, der tatsächlichen Öffnungsbreite und dem zwischen den Schenkeln 7, 9 eingeschlossenen Winkel. Vorzugsweise ist der Träger 3 so gestaltet, dass eine Drehung von ca. 120° die Freigabe des Leitpfostens 6 sicherstellt. In Abhängigkeit von der Öffnungsbreite des Trägers 3 sollte der Drehwinkel des Trägers 3 um den Hauptdrehpunkt 19 größer als 90° sein und kann bis zu 180° betragen.

Die Mäheinrichtung 1 wird, wenn der Leitpfosten aus der Öffnung des Trägers 3 ausgefahren ist, in die Ausgangsposition entsprechend der Darstellung in Fig. 1 zurückgefahren. Dafür ist beispielsweise am Hauptdrehpunkt 19 eine Spiralfeder (nicht gezeigt) als Rückholfeder integriert. Die erforderliche Rückholkraft kann aber auch durch andere Elemente, wie z.B. eine Gasdruckfeder bereitgestellt werden. Anschließend fährt die Mäheinrichtung linear weiter, um das zwischen den Leitpfosten liegende Bankett zu mähen, bis der nächste Leitpfosten erreicht wird. Die Fahrtrichtung bleibt während des gesamten Umfahrens des Trägers 3 um den Leitpfosten 6 unverändert. Auch eine Fahrtunterbrechung ist während des Ummähens von mehreren Leitpfosten 6 nacheinander nicht erforderlich.

Ein geringfügig modifizierter Mähablauf tritt ein, wenn der Leitpfosten 6 zunächst mit dem innenliegenden Schenkel 7 in Berührung kommt. Beim Anschlagen des Leitpfostens 6 an den innenliegenden Schenkel 7 wird durch dessen Drehlagerung im Nebendrehpunkt 11 ein Verschwenken des innenliegenden Schenkels 7 vom außenliegenden Schenkel 9 weg bewirkt. Der innenliegende Schenkel schwenkt damit in entgegen gesetzter Drehrichtung um den Nebendrehpunkt, im Vergleich zur Schwenkrichtung des Trägers um den Hauptdrehpunkt. Damit vergrößert sich der Abstand zwischen den beiden Schenkeln des Trägers, so dass auch größere oder nicht mittig einlaufende Verkehrsleitelemente zwischen vorderem und hinterem Schneidwerkzeug einerseits und drittem Schneidwerkzeug andererseits aufgenommen und ummäht werden können. Ohne diese Schwenkmöglichkeit müsste zumindest mit einer Beschädigung des Leitpfostens 6, im schlimmsten Fall sogar mit einem Ausreißen des Leitpfostens gerechnet werden.

Bei fortgesetzter Bewegung des Trägers 3 in Fahrtrichtung fährt der Leitpfosten 6 so lange zwischen die beiden Schenkel 7, 9 ein bis es zu einem Kontakt mit der Traverse 5 oder dem außenliegenden Schenkel 9 bzw. dem zu diesem gehörenden Gehäuse des dritten Schneidwerkzeugs kommt. Dadurch wird, wie oben beschrieben, die Drehung des Trägers 3 um den Hauptdrehpunkt 19 bewirkt, in folge derer die Schneidwerkzeuge 13, 15, 17 einen vollständigen Mähkreis um den Leitpfosten 6 beschreiben.

Der innenliegende Schenkel 7 wird bevorzugt mittels am Nebendrehpunkt 11 integrierter Rückstellmittel (nicht gezeigt), beispielsweise einer Feder, gegen einen Endanschlag gespannt. Durch die Rückstellmittel wird während des Einlaufens des Leitpfostens 6 bzw. des Freischneidvorgangs ein Zurückschwenken des innenliegenden Schenkels 7 bewirkt, bis zu seiner durch diesem Endanschlag begrenzten Ausgangsposition bzw. bis zu einer Position, in der es zum erneuten Anschlag an den Leitpfosten kommt. Der innenliegende Schenkel 7 würde natürlich auch vom außenliegenden Schenkel 9 weg geschwenkt werden, wenn es erst im Laufe des Freischneidvorgangs, also während der Drehung des Trägers 3, zum Kontakt zwischen Leitpfosten und innenliegendem Schenkel 7 kommt.

Nachdem der Bereich um den Leitpfosten frei geschnitten wurde und der Leitpfosten aus dem Bereich zwischen den Schenkeln 7, 9 ausgefahren ist, wird der innenliegenden Schenkel 7 jedenfalls in seine Ausgangsposition zurückgeführt, falls er sich noch nicht in dieser Position befindet.

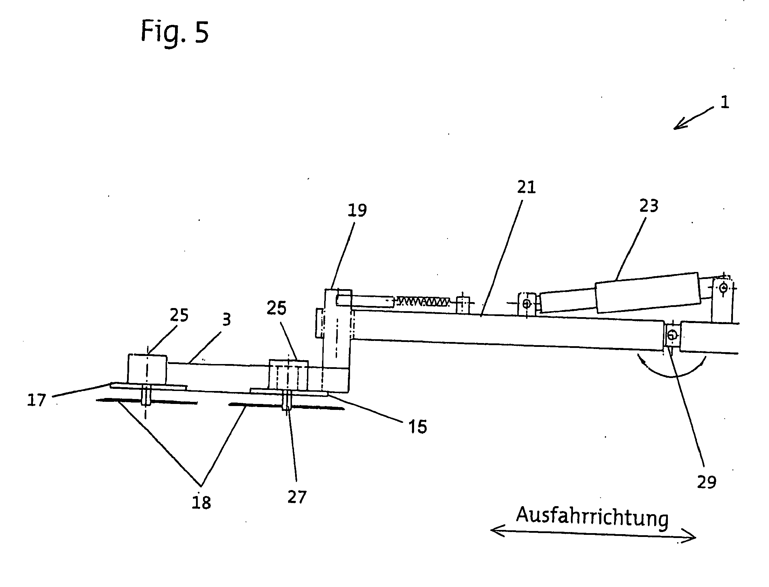

Fig. 5 zeigt eine vereinfachte Seitenansicht der erfindungsgemäßen Mäheinrichtung 1. Die Schneidwerkzeuge 13, 15, 17 werden mit je einem Hydraulikmotor 25 angetrieben, der sich direkt am Schneidwerkzeug befindet und durch eine rotierende Welle 27 mit diesen verbunden ist. Mittels eines Hydraulikzylinders 23 ist es möglich, das Gestell 21 und damit auch den Träger 3 um eine Schwenkachse 29 zu verkippen, um somit die Beweglichkeit in unebenem Gelände bzw. an Hängen zu verbessern. Außerdem kann die gesamte Mäheinrichtung an das Fahrzeug herangeschwenkt werden, wodurch ein Transport ohne Mähbetrieb möglich wird, ohne dass eine Demontage der Mäheinrichtung vom Fahrzeug erforderlich ist.

Die flache Bauweise des Trägers 3 ermöglicht ein problemloses Unterfahren von Hindernissen, wie z. B. das Unterfahren von Schutzplanken, um dort befindliches Gras zu mähen. Da sich die Schutzplanken jedoch in einem anderen Abstand zum Stra-βenrand befinden als die Leitpfosten 3 und die Schneidwerkzeuge 13, 15, 17 somit bei Einhaltung der Fahrtrichtung die Tragstempel der Schutzplanken nicht erreichen können, wird über einen weiteren Hydraulikzylinder (nicht gezeigt) das Ausfahren des Trägers 3 quer zur Fahrtrichtung ermöglicht. Der in Fig. 5 eingezeichnete Doppelpfeil zeigt die Ausfahrrichtung.

### Bezugszeichenliste:

- 1 -: Mäheinrichtung
- 3 -: Träger
- 5 -: Traverse
- 6 -: Leitpfosten
- 7 -: innenliegender Schenkel
- 9 -: außenliegender Schenkel
- 10 -: Einbuchtung
- 11 -: Nebendrehpunkt
- 13 -: vorderes Schneidwerkzeug
- 15 -: hinteres Schneidwerkzeug
- 17 -: drittes Schneidwerkzeug
- 18 -: rotierende Messer
- 19 -: Hauptdrehpunkt
- 21 -: Gestell
- 23 -: Hydraulikzylinder
- 25 -: Hydraulikmotor
- 27 -: rotierende Welle
- 29 -: Schwenkachse

## Patentansprüche

1. Mäheinrichtung (1) zum Mähen von Gras um Straßenleitpfosten (6) und andere Verkehrsleitelemente, die an einem Fahrzeug anbringbar ist, mit einem Gestell (21), einem zwei Schenkel (7, 9) umfassenden Träger (3), der über einen Hauptdrehpunkt (19) am Gestell (21) befestigt ist und von einer entgegen der Fahrtrichtung wirkenden Kraft, die beim Anschlagen des Trägers an den Leitpfosten auftritt, gegen die Fahrtrichtung schwenkbar ist, sowie mit mehreren an den Schenkeln (7,9) angebrachten Schneidwerkzeugen (13, 15, 17), **dadurch gekennzeichnet, dass**
- der Träger (3) weiterhin eine Traverse (5) umfasst, welche in einer Ausgangsposition, in der kein Kontakt zu einem Leitpfosten (6) besteht, winklig zur Fahrtrichtung ausgerichtet ist;
- sich ein fahrzeugnaher, innenliegender Schenkel (7) und ein fahrzeugferner, außenliegender Schenkel (9) von der Traverse (5) ausgehend in Fahrtrichtung erstrecken;
- an dem innenliegenden Schenkel (7) ein in Fahrtrichtung vorderes Schneidwerkzeug (13) und ein in Fahrtrichtung hinteres Schneidwerkzeug (15) angebracht sind;
- an dem außenliegenden Schenkel (9) ein drittes Schneidwerkzeug (17) angebracht ist, wobei die vom dritten Schneidwerkzeug (17) erfasste Mähfläche in der Ausgangsposition in Fahrtrichtung gesehen zumindest teilweise hinter der vom vorderen Schneidwerkzeug (13) erfassten Mähfläche liegt;
- die Traverse (5) drehfest mit dem außenliegenden Schenkel (9) und über einen Nebendrehpunkt (11) drehbar mit dem innenliegenden Schenkel (7) verbunden ist;
- die Schenkel (7, 9) in der Ausgangsposition so weit voneinander beabstandet sind, dass sich die Schneidwerkzeuge (13, 15, 17) nicht berühren;
- bei Kontakt des Leitpfostens (6) mit dem innenliegenden Schenkel (7) der innenliegende Schenkel (7) um den Nebendrehpunkt (11) vom außenliegenden Schenkel (9) weg schwenkbar ist.

2. Mäheinrichtung (1) nach Anspruch 1, **dadurch gekennzeichnet, dass** der Träger (3) im Bereich der Traverse (5) eine zur Aufnahme des Leitpfostens (6) geeignete Einbuchtung (10) aufweist.

3. Mäheinrichtung (1) nach Anspruch 2, **dadurch gekennzeichnet, dass** die Einbuchtung (10) kreisbogenförmig ist.

4. Mäheinrichtung (1) nach einem der Ansprüche 1 bis 3, **dadurch gekennzeichnet, dass** über Rückstellmittel ein Zurückschwenken des innenliegenden Schenkels (7) und des Trägers (3) in die Ausgangsposition bewirkt wird, sobald kein Kontakt zum Leitpfosten besteht.

5. Mäheinrichtung (1) nach einem der Ansprüche 1 bis 4, **dadurch gekennzeichnet, dass** die Schneidwerkzeuge (13, 15, 17) durch je einen Hydraulikmotor angetrieben werden, die am Träger (3) befestigt sind.

6. Mäheinrichtung (1) nach einem der Ansprüche 1 bis 5, **dadurch gekennzeichnet, dass** die vom dritten Schneidwerkzeug (17) erfasste Mähfläche in der Ausgangsposition in Fahrtrichtung gesehen zumindest teilweise vor der vom hinteren Schneidwerkzeug (15) umfassten Mähfläche liegt;

7. Mäheinrichtung (1) nach einem der Ansprüche 1 bis 6, **dadurch gekennzeichnet, dass** die Schneidwerkzeuge (13, 15, 17) rotierende Messer (18) sind.

8. Mäheinrichtung (1) nach einem der Ansprüche 1 bis 7, **dadurch gekennzeichnet, dass** der Träger (3) um den Hauptdrehpunkt (19) um etwa 90° bis 180° drehbar ist.

9. Mäheinrichtung (1) nach einem der Ansprüche 1 bis 8, **dadurch gekennzeichnet, dass** die Traverse (5) in der Ausgangsposition in einem Winkel von 45° bis 135° zur Fahrtrichtung ausgerichtet ist.

10. Mäheinrichtung (1) nach einem der Ansprüche 1 bis 9, **dadurch gekennzeichnet, dass** sie zum Unterfahren von Hindernissen, insbesondere von Schutzplanken eine flache Bauweise aufweist, wobei Träger (3) und Gestell (21) in einer gemeinsamen Ebene liegen.

11. Mäheinrichtung (1) nach einem der Ansprüche 1 bis 10, **dadurch gekennzeichnet, dass** der Träger (3) und/oder das Gestell (21) quer zur Fahrtrichtung verschiebbar sind, wobei die Verschiebung mittels eines Hydraulikzylinders erfolgt.

12. Mäheinrichtung (1) nach einem der Ansprüche 1 bis 11, **dadurch gekennzeichnet, dass** sie zum Übergreifen über Hindernisse, insbesondere über Schutzplanken, einen Höhenversatz zwischen Gestell (21) und Träger (3) von etwa 50 bis 100 cm aufweist.

13. Mäheinrichtung (1) nach einem der Ansprüche 1 bis 12, **dadurch gekennzeichnet, dass** das Gestell (21) mit dem Träger (3) mittels eines hydraulischen Schwenkzylinders angehoben und in vertikaler Lage an das Fahrzeug anschwenkbar ist.

14. Mäheinrichtung (1) nach einem der Ansprüche 1 bis 13, **dadurch gekennzeichnet, dass** ihre Steuerung über im Fahrzeug befindliche Bedienelemente erfolgt.

## Claims

1. A mowing device (1) for mowing grass around road demarcation posts (6) and other traffic control elements, which can be attached to a vehicle, comprising a framework (21), a structural member (3) having two arms (7, 9), which is secured to the framework (21) via a main pivot point (19), and which can be swivelled against the direction of travel by a force acting in the direction opposite to the direction of travel which arises when the structural member hits a demarcation post, and comprising a plurality of cutting tools (13, 15, 17) attached to the arms (7, 9), **characterised in that**
- the structural member (3) also comprises a cross member (5) which is aligned at an angle to the direction of travel in a starting position in which there is no contact with a demarcation post (6);
- an inner arm (7) close to the vehicle and an outer arm (9) remote from the vehicle extend from the cross member (5) in the direction of travel;
- an anterior cutting tool (13) in the direction of travel and a posterior cutting tool (15) in the direction of travel are attached to the inner arm (7);
- a third cutting tool (17) is attached to the outer arm (9), wherein the mowing area covered by the third cutting tool (17) in the starting position when viewed in the direction of travel lies at least partially behind the mowing area covered by the anterior cutting tool (13);
- the cross-member (5) is connected rotationally fixedly to the outer arm (9) and is connected rotatably to the inner arm (7) via an auxiliary pivot point (11);
- the arms (7, 9) are spaced sufficiently far apart from one another in the starting position such that the cutting tools (13, 15, 17) do not contact one another;
- when the demarcation post (6) contacts the inner arm (7), said inner arm (7) can be pivoted away from the outer arm (9) about the auxiliary pivot point (11).

2. The mowing device (1) according to claim 1, **characterised in that** the structural member (3) has a suitable recess (10) for receiving the demarcation post (6) in the area of the cross member (5).

3. The mowing device (1) according to claim 2, **characterised in that** the recess (10) is circular-arc-shaped.

4. The mowing device (1) according to any one of claims 1 to 3, **characterised in that** restoring means effect a swivelling of the inner arm (7) and the structural member (3) back into the starting position as soon as there is no contact with the demarcation post.

5. The mowing device (1) according to any one of claims 1 to 4, **characterised in that** the cutting tools (13, 15, 17) are each driven by a hydraulic motor fixed to the structural member (3).

6. The mowing device (1) according to any one of claims 1 to 5, **characterised in that** the mowing area covered by the third cutting tool (17) in the starting position when viewed in the direction of travel lies at least partially in front of the mowing area covered by the posterior cutting tool (15).

7. The mowing device (1) according to any one of claims 1 to 6, **characterised in that** the cutting tools (13, 15, 17) are rotating blades (18).

8. The mowing device (1) according to any one of claims 1 to 7, **characterised in that** the structural member (3) can be rotated by about 90° to 180° about the main pivot point (19).

9. The mowing device (1) according to any one of claims 1 to 8, **characterised in that** in the starting position the cross member (5) is aligned at an angle of 45° to 135° to the direction of travel.

10. The mowing device (1) according to any one of claims 1 to 9, **characterised in that** this has a flat design to travel below obstacles, in particular crash barriers, wherein the structural member (3) and framework (21) lie in a common plane.

11. The mowing device (1) according to any one of claims 1 to 10, **characterised in that** the structural member (3) and/or the framework (21) can be displaced transverse to the direction of travel, wherein the displacement is effected by means of a hydraulic cylinder.

12. The mowing device (1) according to any one of claims 1 to 11, **characterised in that** this has a height adjustment between framework (21) and structural member (3) of about 50 to 100 cm for reaching over obstacles, in particular over crash barriers.

13. The mowing device (1) according to any one of claims 1 to 12, **characterised in that** the framework (21) with the structural member (3) is raised by means of a hydraulic pivoting cylinder and can be pivoted onto the vehicle in the vertical position.

14. The mowing device (1) according to any one of claims 1 to 13, **characterised in that** this is controlled by means of control elements located in the vehicle.

## Revendications

1. Dispositif de débroussaillage (1) pour tondre l'herbe autour de poteaux indicateurs routiers (6) et autres éléments indicateurs routiers, susceptible d'être monté sur un véhicule, avec un châssis (21), un support (3) comprenant deux branches (7, 9), qui est fixé sur le châssis (21) par l'intermédiaire d'un point d'appui principal (19) et qui sous l'effet d'une force agissant à l'encontre du sens de déplacement, qui naît lorsque le support bute contre le poteau indicateur est susceptible de pivoter contre le sens de déplacement, ainsi qu'avec plusieurs outils de coupe (13, 15, 17) montés sur les branches (7, 9), **caractérisé en ce que**
- le support (3) comprend par ailleurs une traverse (5), qui dans une position initiale, dans laquelle aucun contact n'existe avec un poteau indicateur (6) est orientée sous un angle par rapport au sens de déplacement ;
- une branche intérieure (7), proche du véhicule et une branche extérieure (9) éloignée du véhicule s'étendent à partir de la traverse (5) dans le sens de déplacement ;
- sur la branche intérieure (7) est monté un outil de coupe antérieur (13) et un outil de coupe postérieur (15) dans le sens de déplacement ;
- sur la branche extérieure (9) est monté un troisième élément de coupe (17), la surface à tondre englobée par le troisième élément de coupe (17), vue dans la position initiale se situant au moins partiellement derrière la surface à tondre englobée par l'outil de coupe antérieur (13) ;
- la traverse (5) est reliée de façon solidaire en rotation avec la branche extérieure (9) et de façon rotative avec la branche intérieure (7), par l'intermédiaire d'un point d'appui auxiliaire (11) ;
- dans la position initiale, les branches (7, 9) sont écartées l'une de l'autre, assez loin pour que les outils de coupe (13, 15, 17) ne se touchent pas ;
- lors d'un contact du poteau indicateur (6) avec la branche intérieure (7), la branche intérieure (7) est susceptible de pivoter autour du point d'appui auxiliaire (11), pour s'éloigner de la branche extérieure (9).

2. Dispositif de débroussaillage (1) selon la revendication 1, **caractérisé en ce que**,
dans la zone de la traverse (5), le support (3) comporte un creux (10) adapté pour le logement du poteau indicateur (6).

3. Dispositif de débroussaillage (1) selon la revendication 2, **caractérisé en ce que** le creux (10) a la forme d'un arc de cercle.

4. Dispositif de débroussaillage (1) selon l'une quelconque des revendications 1 à 3, **caractérisé en ce que**, par l'intermédiaire de moyens de renvoi, un pivotement vers l'arrière de la branche intérieure (7) et du support (3) dans la position initiale est provoqué, dès qu'aucun contact n'existe avec le poteau indicateur.

5. Dispositif de débroussaillage (1) selon l'une quelconque des revendications 1 à 4, **caractérisé en ce que** les outils de coupe (13, 15, 17) sont entraînés par chacun un moteur hydraulique, qui sont fixés sur le support (3).

6. Dispositif de débroussaillage (1) selon l'une quelconque des revendications 1 à 5, **caractérisé en ce que**, vue dans le sens de déplacement, dans la position initiale, la surface à tondre englobée par le troisième outil de coupe (17) se situe au moins partiellement à l'avant de la surface à tondre englobée par l'outil de coupe postérieur (15).

7. Dispositif de débroussaillage (1) selon l'une quelconque des revendications 1 à 6, **caractérisé en ce que** les outils de coupe (13, 15, 17) sont des lames rotatives (18).

8. Dispositif de débroussaillage (1) selon l'une quelconque des revendications 1 à 7, **caractérisé en ce que** le support (3) est rotatif d'environ 90° à 180° autour du point d'appui principal (19).

9. Dispositif de débroussaillage (1) selon l'une quelconque des revendications 1 à 8, **caractérisé en ce que** dans la position initiale, la traverse (5) est orientée sous un angle de 45° à 135° par rapport au sens de déplacement.

10. Dispositif de débroussaillage (1) selon l'une quelconque des revendications 1 à 9, **caractérisé en ce que**, il présente, pour passer sous des obstacles, notamment des madriers de protection une conception plate, le support (3) et le châssis (21) se situant dans un plan commun.

11. Dispositif de débroussaillage (1) selon l'une quelconque des revendications 1 à 10, **caractérisé en ce que** le support (3) et/ou le châssis (21) sont déplaçables à la transversale du sens de déplacement, le déplacement étant assuré au moyen d'un vérin hydraulique.

12. Dispositif de débroussaillage (1) selon l'une quelconque des revendications 1 à 11, **caractérisé en ce que** pour passer par dessus des obstacles, notamment des madriers de protection, il présente un déport en hauteur de 50 à 100 cm, entre le châssis (21) et le support (3).

13. Dispositif de débroussaillage (1) selon l'une quelconque des revendications 1 à 12, **caractérisé en ce que** le châssis (21) avec le support (3) est relevé au moyen d'un vérin de pivotement hydraulique et susceptible de pivoter en position verticale vers le véhicule.

14. Dispositif de débroussaillage (1) selon l'une quelconque des revendications 1 à 13, **caractérisé en ce que** sa commande est assurée par l'intermédiaire d'un élément de commande situé dans le véhicule.
